(19) Europäisches Patentamt
European Patent Office
Office européen des brevets

(11) **EP 4 364 838 B1**

(12) **EUROPEAN PATENT SPECIFICATION**

(45) Date of publication and mention
of the grant of the patent:
**26.11.2025 Bulletin 2025/48**

(21) Application number: **22831472.0**

(22) Date of filing: **16.05.2022**

(51) International Patent Classification (IPC):
***B01J 19/00*** (2006.01)

(52) Cooperative Patent Classification (CPC):
**B01J 19/0093;** B01J 19/006; B01J 2219/00765;
B01J 2219/00813; B01J 2219/00959;
B01J 2219/00984

(86) International application number:
**PCT/CN2022/092970**

(87) International publication number:
**WO 2023/273645 (05.01.2023 Gazette 2023/01)**

(54) **MICROREACTOR**

MIKROREAKTOR

MICRORÉACTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.07.2021 CN 202110751886**

(43) Date of publication of application:
**08.05.2024 Bulletin 2024/19**

(73) Proprietors:
• **China Petroleum & Chemical Corporation
Beijing 100728 (CN)**
• **Sinopec Research Institute of Safety
Engineering Co., Ltd.
Qingdao, Shandong 266071 (CN)**

(72) Inventors:
• **FENG, Junjie
Qingdao, Shandong 266071 (CN)**
• **SUN, Bing
Qingdao, Shandong 266071 (CN)**

• **YANG, Zhe
Qingdao, Shandong 266071 (CN)**
• **ZHU, Hongwei
Qingdao, Shandong 266071 (CN)**
• **XU, Wei
Qingdao, Shandong 266071 (CN)**
• **ZHAO, Chenyang
Qingdao, Shandong 266071 (CN)**
• **LIU, Yujia
Qingdao, Shandong 266071 (CN)**

(74) Representative: **karo IP
Patentanwälte PartG mbB
Steinstraße 16-18
40212 Düsseldorf (DE)**

(56) References cited:
WO-A2-2004/076056        CN-A- 1 179 199
CN-A- 106 423 033        CN-A- 106 669 582
CN-A- 108 854 892        CN-A- 110 090 607
CN-A- 111 225 739        CN-A- 112 206 695
CN-U- 206 240 456        US-A1- 2009 028 763

**Description**

Technical Field

The present invention relates to the technical field of microchemical engineering, and specifically to a microreactor. WO 2004/076056 A2 describes a microfluidic chemical reactor for the manufacture of chemically produced nanoparticles. CN 206 240 456 U describes a microreactor.

Technical Background

Microreactor is a micro device which is manufactured based on solid substrate by means of special micro-manufacturing technology, and can be used to carry out chemical reactions or mix substances. The "micro" in microreactor means that the channel for process fluid is generally at the micrometer level, and also up to the millimeter level at present.

The microreactor, characterized by small size, large specific surface area, high reaction efficiency and precise control, has a broad prospect for applications relating to violent exothermic reactions, reactions with intermediates or unstable products, fast reactions with strict requirements on component ratio, high temperature and high pressure conditions, etc., and is expected to become a revolutionary technology with high efficiency and safety in the chemical industry.

Due to the small scale, laminar flow state, significant interface action and other characteristics, the flow and transfer properties of the microreactor, as well as the design concept thereof differ greatly from those of conventional reactors. At present, the microreactor mainly adopts a static mixing mode. That is, the microreactor does not rely on external power, such as ultrasound, electric field, magnetic field or the like, but performs the mixing of reactants only through the structural design of the channel and the control of fluid flow properties. Therefore, the microreactor is characterized by stability, simplicity, and wide range of application.

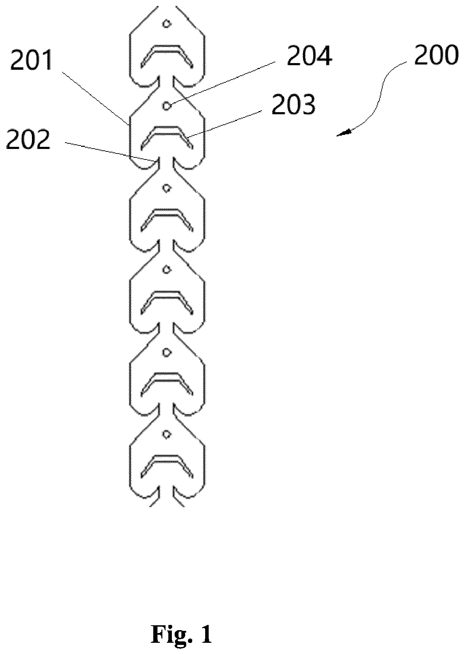

Fig. 1 shows an existing microreactor 200. The microreactor includes a plurality of sequentially connected mixing units. An outer contour 201 of each mixing unit has an arcuate profile which is only at an upstream end and does not extend to a side portion. The side portion of the outer contour 201 is formed by folded lines at both ends. An inlet and an outlet are formed at two opposite ends of the outer contour 201, respectively. The outlet 202 of each mixing unit is a straight passage with a constant cross-section. In addition, a folded line-shaped first blocking portion 203 and a circular second blocking portion 204 are provided in each mixing unit. The second blocking portion 204 is closer to the outlet of the mixing unit than the first blocking portion 203. As a result, the fluid, when passing through the outlet 202 of a previous mixing unit and entering into a subsequent adjoining mixing unit, impacts on the first blocking portion 203, then flows to both sides in two separate streams, and finally to the outlet of the mixing unit.

In the microreactor, the folded line-shaped profile of the outer profile 201 leads to energy loss of the fluid and increases the pressure drop. In addition, the folded line-shaped profile further leads to a larger ineffective mixing region at a rear side of the first blocking portion, and the impact of the two streams of fluid becomes less effective, resulting in a poorer mixing efficiency.

Also, for the above microreactor, due to the structure of the outlet 202 of the mixing unit, the fluid tends to "backtrack" after impacting on the first blocking portion 203, which is disadvantageous to the mixing efficiency and also increases the pressure drop.

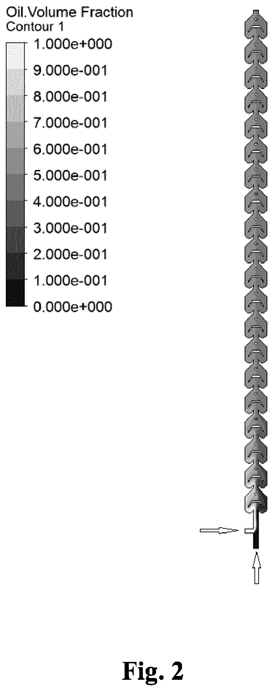

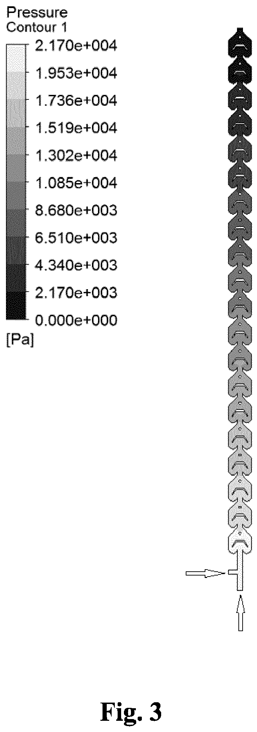

An experiment is conducted using the microreactor in Fig. 1 in a liquid-liquid mixing condition. Water and isooctanol are supplied from the inlet at a rate of 0.3 m/s. Figs. 2 and 3 show the mixing and pressure conditions of the microreactor in Fig. 1, respectively. As can be seen in Fig. 2, the microreactor requires the fluids to pass through at least 8 mixing units to achieve effective mixing between the fluids. In the context, "effective mixing" is defined as a state when the concentration difference between left and right sides of the chamber within the mixing unit is less than 0.5%. As can be seen in Fig. 3, the pressure drop of the fluids is about 8680 Pa when effective mixing is achieved after the fluids pass through the 8 mixing units within the microreactor.

Similarly, an experiment is conducted using the microreactor in Fig. 1 in a gas-liquid mixing condition. Water and air are supplied from the inlet at a rate of 0.3 m/s. The experimental result shows that the microreactor requires the fluid to pass through at least 6 mixing units to achieve effective mixing between the fluids, and the pressure drop is about 2.3 KPa.

In addition, an experiment on the efficiency of carbon dioxide absorbed by alcohol amines is conducted using the microreactor in Fig. 1. The experimental process is to absorb carbon dioxide using alcohol amine under low temperature conditions, and heat to allow the carbon dioxide to be released from the chemical solvent. Specifically, a gas mixture of carbon dioxide with a volume fraction of 12% and a diethanol amine solution with a concentration of 30 wt. % enter the microreactor at 8 MPa through two branches, respectively, wherein the gas is fed at 5-10 $Nm^3$/h and the liquid phase is fed at 50-80 L/h. The result shows that the maximum absorption rate of carbon dioxide is up to no more than 92%.

Summary of the Invention

The present invention proposes a microreactor for enhanced mixing procedure, with which at least one of the above problems can be eliminated or alleviated.

According to the present invention, which is defined in the independent claim 1, a microreactor is proposed, which comprises a plurality of mixing units connected in sequence along a longitudinal direction, each of the mixing units comprising a housing in which a flow chamber is formed. An inlet portion and an outlet portion formed on two opposite ends of each mixing unit along the longitudinal direction, respectively, are in communication with the flow chamber. The mixing unit further comprises a first blocking portion arranged within the flow chamber, so that in the flow chamber a first advancing passage is defined by a first side profile of the housing and the first blocking portion, a second advancing passage is defined by a second side profile of the housing opposite the first side profile and the first blocking portion, and a mixing region is defined between the first blocking portion and the outlet portion. Both the first advancing passage and the second advancing passage are in communication with the mixing region. At downstream ends of said first advancing passage and said second advancing passage, said microreactor is further provided with auxiliary flow-guiding portions protruding from said first side profile and said second side profile respectively and extending towards but spaced apart from each other, the auxiliary flow-guiding portions being configured so that the fluid in the first advancing passage and that in the second advancing passage flow towards each other into the mixing region and impact on each other. Extension lines at ends of surfaces of a pair of auxiliary flow-guiding portions facing the first advancing passage or the second advancing passage are configured to intersect within the mixing region.

The auxiliary flow-guiding portions not only enable the fluids in the first advancing passage and the second advancing passage to impact on each other more violently, but also substantially reduce the low flow rate portion in the mixing region, thereby reducing the ineffective mixing region. Therefore, the mixing efficiency of the microreactor can be effectively improved.

In a preferred embodiment, a surface of each auxiliary flow-guiding portion facing the first advancing passage or the second advancing passage is configured to be planar or arcuate.

In a preferred embodiment, said auxiliary flow-guiding portions are configured so that an angle between a main flow direction of fluid in the first advancing passage and that in the second advancing passage exceeds 90°. A cross-section of each of the first advancing passage and the second advancing passage is configured to be constant.

In a preferred embodiment, a lateral dimension of each auxiliary flow-guiding portion is no more than a lateral dimension of the first blocking portion.

In a preferred embodiment, the auxiliary flow-guiding portions are configured symmetrically to each other.

In a preferred embodiment, a distance along the longitudinal direction between each auxiliary flow-guiding portion and the first blocking portion accounts for 1/6 to 1/2, preferably 1/4 to 1/3, of a longitudinal dimension of the entire flow chamber.

In a preferred embodiment, said first side profile and said second side profile are symmetrically arranged opposite each other, each of which comprises an arcuate upstream segment and a linear downstream segment smoothly connected thereto.

In a preferred embodiment, said first blocking portion comprises a linear central segment extending along the lateral direction and a linear edge segment connected to each end of the central segment, said edge segment being inclined toward said central segment along an upstream direction, so as to form an angle between said edge segment and said central segment.

In a preferred embodiment, the linear downstream segment of the first side profile is inclined toward that of the second side profile along a downstream direction, and the linear downstream segment is arranged parallel to the edge segment, so that a cross-section of a passage between said downstream segment and said edge segment remains constant.

In a preferred embodiment, an upstream end of the edge segment is aligned with an upstream end of the linear downstream segment.

In a preferred embodiment, a longitudinal length of said first blocking portion accounts for 1/4 to 1/2 of a longitudinal length of said flow chamber.

In a preferred embodiment, both the inlet portion and the outlet portion of each said mixing unit are in communication with the flow chamber of an adjacent mixing chamber, wherein the central segment of the first blocking portion is directly opposite the inlet portion, and a lateral dimension of said central segment is no more than 3 times a maximum cross-sectional dimension of said inlet portion.

In a preferred embodiment, an angle between two edge segments is no less than 50°.

In a preferred embodiment, said first blocking portion is centrally arranged within said flow chamber along a lateral direction perpendicular to the longitudinal direction, and comprises a linear central segment extending along the lateral direction and a linear edge segment arranged at each end of the central segment, said edge segment being inclined toward said central segment along an upstream direction so as to form an angle between said edge segment and said central segment, wherein said central segment comprises a plurality of blocking elements spaced apart from each other, allowing a portion of the fluid to flow into the mixing region through spacing between the blocking elements and impact on the fluid flowing into the mixing region via the first advancing passage and the second advancing passage.

In a preferred embodiment, an expansion passage gradually expanding downstream along the longitudinal direction is formed between the outlet portion of one mixing unit and the inlet portion of a next mixing unit.

In a preferred embodiment, the expansion passage has a constant expanding slope.

In a preferred embodiment, a minimum cross-sectional dimension of the expansion passage is no less than 1/4 of a maximum cross-sectional dimension of the expansion passage.

In a preferred embodiment, a maximum cross-sectional dimension of an expansion passage ranges from 100 micrometers to 2 centimeters.

In a preferred embodiment, a ratio of a maximum cross-sectional dimension of said expansion passage to a maximum lateral dimension of said flow chamber ranges from 1/10 and 1/2.

Brief Description of the Drawings

In the following the present invention will be described in detail with reference to the accompanying drawings. In the drawings:

Fig. 1 schematically shows a structure of an existing microreactor;

Fig. 2 schematically shows mixing efficiency of the microreactor as shown in Fig. 1 for liquid-liquid mixing;

Fig. 3 schematically shows pressure drop of the microreactor as shown in Fig. 1 for liquid-liquid mixing;

Fig. 4 schematically shows a structure of a microreactor according to one embodiment of the present invention;

Fig. 5 is a partial enlargement view of the microreactor as shown in Fig. 4;

Fig. 6 schematically shows flowing path of fluids in the microreactor as shown in Fig. 4 for liquid-liquid mixing;

Fig. 7 schematically shows mixing efficiency of the microreactor as shown in Fig. 4 for liquid-liquid mixing;

Fig. 8 schematically shows pressure drop of the microreactor as shown in Fig. 4 for liquid-liquid mixing;

Fig. 9 schematically shows flowing path of fluids in the microreactor as shown in Fig. 4 for gas-liquid mixing;

Fig. 10 schematically shows flowing path of fluids in the microreactor as shown in Fig. 4 for nitration reaction;

Fig. 11 schematically shows a structure of a microreactor according to another embodiment of the present invention; and

Fig. 12 schematically shows a structure of a microreactor according to a further embodiment of the present invention.

In the drawings, the same reference numerals are used to indicate the same components. The drawings are not necessarily drawn to actual scales.

Detailed Description of Embodiments

The present invention will be further described below with reference to the accompanying drawings.

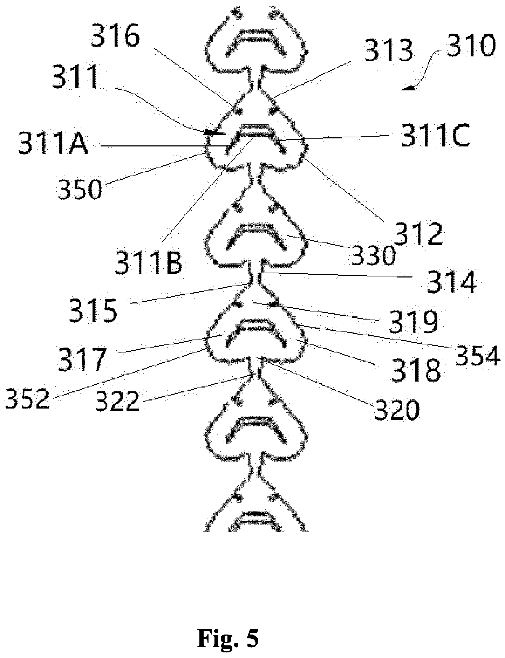

In the present invention, "longitudinal direction" refers to a direction in which the fluid flows in general, i.e. a direction along the length of the entire microreactor. For example, "longitudinal direction" in Fig. 5 should be understood as a vertical direction within the drawing plane. Correspondingly, "lateral direction" refers to a direction perpendicular to the "longitudinal direction", i.e. a direction along the width of the entire microreactor. For example, "lateral direction" in Fig. 5 should be understood as a horizontal direction within the drawing plane. The terms "lateral dimension" and "longitudinal dimension" refer to projected sizes of relevant parts along the lateral direction and the longitudinal direction, respectively.

In the present invention, "upstream" refers to a side where the fluid is provided, and "downstream", in contrast, refers to a side to which the fluid flows.

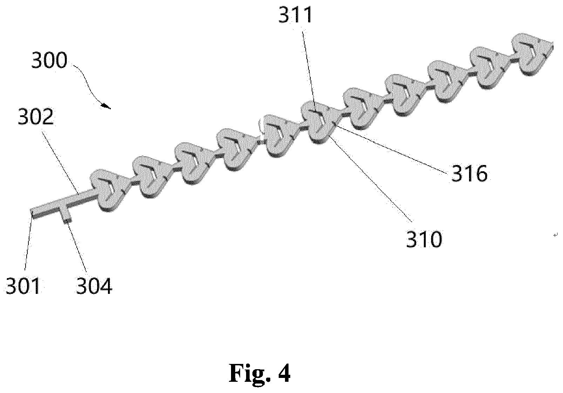

Fig. 4 shows an embodiment of a microreactor 300 according to the present invention. The microreactor 300 comprises a plurality of mixing units 310 connected in sequence along a longitudinal direction. Fig. 4 shows an embodiment consisting of 11 mixing units 310. However, it should be understood that more or fewer mixing units 310 may also be provided as needed. The microreactor 300 further comprises a fluid entry passage 302 connected to an upstream side of a first mixing unit of the sequentially connected mixing units. The fluid entry passage 302 is in communication with a first entry branch 301 and a second entry branch 304. Fluid may enter the fluid entry passage 302 via the first entry branch 301 and the second entry branch 304, and thus enter the mixing units 310 for mixing. The fluid herein may be gas, liquid, or any other suitable flowable medium. The microreactor 300 further comprises a fluid output passage connected to a downstream side of a last mixing unit of the sequentially connected mixing units, for outputting the mixed (or even reacted) fluid in the microreactor 300 for a next stage of treatment or use, etc.

Fig. 5 is a partial enlargement view of the microreactor 300 shown in Fig. 4. As shown in Fig. 5, each of the mixing units 310 is formed as a planar mixing unit comprising a flat housing 350. The housing 350 is configured to be arranged symmetrically along a longitudinal axis, and thus comprises two side profiles disposed opposite each other, i.e., a first side profile 352 and a second side profile 354. Each of the side profiles comprises an arcuate upstream segment 312 and a linear downstream segment 313. The linear downstream segment 313 is smoothly connected to the arcuate upstream segment 312. The two oppositely disposed upstream segments 312 may be inclined toward each other along a downstream direction, so that the housing may have a substantially inverted "heart" shape. A flow chamber 330 is formed in and encircled by the housing.

As shown in Fig. 5, an inlet portion 320 and an outlet portion 322 are provided at two longitudinally opposite ends of the housing, respectively. Both the inlet portion 320 and the outlet portion 322 are in communication with the flow chamber 330. According to the present invention, an expansion passage 314 gradually expanding downstream along the longitudinal direction is formed between the outlet portion 322 of one mixing unit and the inlet portion 320 of the next mixing unit. The expansion passage 314 has a linear profile, thereby allowing the fluid to enter the flow chamber in an expanding form via the expansion channel 314. It is readily understood that the minimum cross-sectional size of the expansion passage 314 is the size of the inlet portion 320, and the maximum cross-sectional size thereof is the size of the outlet portion 322. The expansion passage 314 may be formed as a neck 315 between the flow chamber of a mixing unit and the flow chamber of an adjacent mixing unit, so that each mixing unit 310 is shaped like a "spade" as a whole.

As shown in Figs. 4 and 5, the mixing unit 310 further comprises a first blocking portion 311 arranged within the flow chamber. It should be appreciated that the first blocking portion 311 may be formed as a solid block, or a hollowed-out structure as shown in Fig. 4, as long as it impedes the flow of fluid therethrough.

According to the present invention, the expansion passage 314 is configured to gradually expand downstream along the longitudinal direction, so that the fluid can impact on the first blocking portion 311 at a high velocity, thereby enabling a highly turbulent state with a high velocity difference, which can facilitate the mixing of fluid. At the same time, the expansion passage 314 may also promote fluid movement to both sides, thereby reducing "backflow" of the fluids along the longitudinal direction that will lead to an increase in pressure drop.

The first blocking portion 311 comprises a central segment 311B arranged at a laterally central position within the flow chamber. The central segment 311B, which has a linear structure, extends along a lateral direction and thus is opposite to the inlet portion 320. The first blocking portion 311 further comprises two linear edge segments 311A and 311C connected to both ends of the central segment 311B respectively. The free ends of the edge segments 311A and 311C are both more inclined towards the upstream side than the central segment 311B, such that an angle is formed between the central segment 311B and each of the edge segments 311A and 311C. Preferably, an angle between the two edge segments 311A and 311C is no less than 50°.

Furthermore, also as shown in Fig. 5, the linear downstream segment 313 may be arranged in parallel to said edge segments 311A and 311C, so as to form an advancing passage therebetween with a constant cross-section. The constant cross-section of the advancing passage means that the cross-section of the advancing passage has a constant size along a direction perpendicular to the flow direction of the fluid. By providing an advancing passage with a constant cross-section, the fluid can be more controllable, and the impact effect after subsequent diversion can also be improved.

According to the present invention, the advancing passages are symmetrically arranged, wherein a first advancing passage 317 is defined between the first side profile 352 and the first blocking section 311, and the second advancing passage 318 is defined between the second side profile 354 and the first blocking section 311. Additionally, the edge segments 311A and 311C are aligned with a corresponding downstream segment 313 at the upstream end. The distance between the arcuate upstream segment 312 of the housing and each of the edge segments 311A and 311C also allows a counterflow passage formed therebetween to have a relatively constant cross-section. In this manner, the fluid flowing through the counterflow passage and the advancing passage remain relatively concentrated, which is advantageous to fluid mixing on the downstream side, thereby resulting in a more intense impact when the fluid is mixed, and improving the mixing efficiency of the fluid. In addition, the counterflow passage is designed to be relatively large, so that a "dead region" is less likely to be formed here, or the area of the "dead region" formed is relatively small.

The lateral dimension of said center segment 311B is no more than three times, preferably no more than two times, the maximum cross-sectional dimension of said expansion passage 314. In one embodiment, the edge segments 311A and 311C become gradually narrow along the direction towards their free ends. In another embodiment, the width of each of the edge segments 311A and 311C remains constant. The overall longitudinal length of the first blocking portion 311 accounts for 1/4 to 1/2, preferably 1/3 to 1/2, of the longitudinal length of the entire flow chamber. The "second barrier" located directly downstream of the first blocking portion 311 as proposed in the prior arts may no longer be provided between the downstream side of the first blocking portion 311 and the outlet portion. In other words, a mixing region 319 is formed in an entire region between the downstream side of the first blocking portion 311 and the upstream side of the neck 315 of the outlet portion. Since the first blocking portion 311 accounts for a large proportion of the longitudinal length of the entire flow chamber, the downstream segment 313 and the first blocking portion 311 have a better fluid guiding effect, and there will be less "dead region" in the flow chamber (especially the mixing region), thereby increasing the liquid holdup and flux of the microreactor 300.

In addition, at the downstream ends of said first advancing passage 317 and said second advancing passage 318, said microreactor is further provided with two auxiliary flow-guiding portions 316 protruding from the downstream segment of said first side profile 352 and the downstream segment of said second side profile 354 respectively and extending towards but spaced apart from each other. The auxiliary flow-guiding portion 316 is configured so that the fluid in the first advancing passage 317 and that in the second advancing passage 318 flow towards each other into the mixing region 319 with an intensified mutual impact. Preferably, the flow direction of the fluid in each of the first advancing passage 317 and the second advancing passage 318 may be changed through the auxiliary flow-guiding portion 316, so that an angle between the main flow directions of the fluid exceeds 90°. This facilitates intensified impact and mixing of the fluid, and effectively reduces the "dead region", or "low flow rate region", in said mixing region 319. In addition, the auxiliary flow-guiding portion 316 also facilitates a similar retention time for different fluids to be mixed and reacted in the mixing region 319. For a process involving reaction, the increase in mixing regions and the similar mixing time can help to make the reaction more uniform and controllable. This not only facilitates a higher mixing efficiency, but also leads to a more stable and controllable chemical reaction process and reduces by-products.

Although Figs. 4 and 5 show only one pair of auxiliary flow-guiding portions 316 provided for each mixing unit 310, it should be understood, however, that more pairs of auxiliary flow-guiding portions may also be provided as needed. The surface of the auxiliary flow-guiding portion 316 facing the first advancing passage 317 or the second advancing passage 318 may be planar or arcuate, so as to change the direction of the fluid as needed. Extension lines at ends of the surfaces of a pair of the auxiliary flow-guiding portions 316 facing the first advancing passage 317 or the second advancing passage 318 is configured to intersect within the mixing region, which facilitates enhanced fluid impact.

The lateral dimension of an individual auxiliary flow-guiding portion 316 is no more than that of the first blocking portion 311. Preferably, the total lateral dimension of a pair of auxiliary flow-guiding portions 316 is no more than the lateral dimension of the first blocking portion 311. Therefore, the mixing region 319 on the downstream side of the first blocking portion 311 can be sufficiently utilized, and the "dead region" can be reduced without increasing the pressure drop, thereby improving the mixing efficiency.

In the embodiments shown in Figs. 4 and 5, the auxiliary flow-guiding portions 316 are configured symmetrically to each other. However, it should be understood that the auxiliary flow-guiding portions 316 may also be configured asymmetrically to each other according to actual needs in application.

Preferably, a distance along the longitudinal direction between the auxiliary flow-guiding portion 316 and the first blocking portion 311 accounts for 1/6 to 1/2, preferably 1/4 to 1/3, of the longitudinal dimension of the entire flow chamber. As a result, two fluid streams will impact with each other in a position closer to the first blocking portion 311 due to the auxiliary guiding-portions 316, thereby reducing the area of the low-flow rate region within the mixing unit 310, which improves the mixing efficiency.

In the present invention, the mixing unit 310 may have an overall lateral dimension between 100 micrometers and 5 centimeters, and an overall thickness between 100 micrometers and 2 centimeters. The cross-sectional dimension of the fluid entry passage 304 and the maximum cross-sectional dimension of each expansion passage 314 may be between 100 micrometers and 2 centimeters, preferably between 100 micrometers and 1 centimeter. The minimum cross-sectional dimension of the expansion passage 314 is no less than 1/4 of the dimension of the fluid entry passage 304. The ratio of the maximum cross-sectional dimension of the expansion passage 314 to the maximum lateral dimension of the flow chamber is between 1/10 and 1/2. The above dimensions facilitate a balance between increasing mixing efficiency and reducing pressure drop. With the above design, the microprocessor 300 can have a transfer area (specific surface area) up to approximately 60,000 $m^2/m^3$.

Said microreactor 300 may be used as either a reactor or a mixer, and may also be combined with a heat-exchange unit, a collection unit, or other reaction/mixing unit, etc., to realize comprehensive functions. It should be understood that in addition to said microreactor 300, additional components or devices such as pump, piping, flowmeter, valve, control system, etc., may be provided for the mixing and reaction of fluids. The microreactor 300 may be used for single-phase systems, gas-liquid systems and liquid-liquid systems, etc., and may also be used for solid-containing multiphase systems with low solid content and small solid-phase dimensions. In addition, the microreactor 300 according to the present invention is applicable to chemical reactions including oxidation, peroxidization, reduction, addition, displacement, substitution, polymerization, nitrification, epoxidation, alkylation, hydrogenation, dehydrogenation, organometallic reaction, carbonylation, alkoxylation, halogenation, dehalogenation, carboxylation, arylation, coupling, condensation, dehydration, alcoholysis, hydrolysis, aminolysis, etherification, ketonation, saponification, isomerization, diazotization, azotization, and enzyme catalysis, etc.

For the microreactor 300 according to the present invention, when the fluid passes through the outlet portion 322 of a mixing unit, the expansion passage 314, the inlet portion 320 of a next mixing unit to enter the flow chamber 330, the fluid can impact on the first blocking portion 311 at a high speed. Since the first blocking portion 311 is folded-line shaped and the fluid flow is diverged, the fluid can rapidly change its direction along the lateral direction and flow to said counterflow passage. In the region upstream of the first blocking portion 311, a flow state with strong turbulence and high velocity difference can be formed, which promotes the mixing of the fluid. At the same time, the fluid, or most of the fluid does not "backtrack", which prevents "back-mixing" and keeps the retention time of the fluid relatively constant, thus allowing for a more controllable flow of fluid. Accordingly, the mixing and reaction process can be precisely controlled and enhanced.

In addition, as the fluid bypasses the edge segments 311A and 311C of the first blocking portion 311 in the counterflow passage, the fluid moves substantially along an arcuate trajectory, so that the mixing effect can be further enhanced by accelerating localized turbulence at the edge segments 311A and 311C. Subsequently, two fluid streams pass through the linear advancing passages, and enter the mixing region 319 opposite each other after leaving the advancing passages, thereby violently impacting and mixing with each other under the influence of the auxiliary flow-guiding portions 316. The mixed fluid may leave the mixing unit via the neck 315, and then enter the next mixing unit for further mixing via the expansion passage at the inlet portion of the next mixing unit. The above structure enhances the local flow rate, shear rate and turbulence, reduces the mass transfer distance, and further enhances the mixing and/or reaction process at the same time.

It should be appreciated that in a microreactor 300, the mixing units 310 do not have to be identical. For example, the first blocking portion 311 and/or the auxiliary flow-guiding portion 316 therein may have different structures and/or dimensions in different mixing units. Additionally, the microreactor may be used in combination with other tubular or kettle-type reactors.

The beneficial effects of the microreactor 300 according to the present invention will be further exemplified below with reference to the following examples.

## Example 1

The mixing efficiency of the microreactor 300 according to the present invention is studied with an experiment using a fluorescent dye-containing system. The mixing efficiency can be measured by determining and calculating the mixing factor at the outlet with a formula as follows:

$$\psi = 1 - \frac{SD_{AIOD}}{SD_{AIOD,0}}$$

wherein $\psi$ denotes the mixing factor, $SD_{AIOD}$ is the relative standard deviation of the concentration of the target at the outlet, and $SD_{AIOD,0}$ is the relative standard deviation of the concentration before mixing. The closer the mixing factor $\psi$ is to 0, the worse the mixing effect is, and the closer it is to 1, the better the mixing effect is.

Safranine aqueous solution and water were introduced into the microreactor 300 of the present invention via the first entry branch 301 and the second entry branch 302, respectively, each at a rate of 20 L/min. The mixing factor $\psi$ measured at the outlet was 0.9 (the mixing factor of the existing microreactor 200 as shown in Fig. 1 is approximately 0.6), and the pressure drop was approximately 0.1 MPa, which indicated that the microreactor 300 of the present invention can achieve good fluid mixing without leading to excessive pressure drop.

## Example 2

A liquid-liquid mixing efficiency experiment is conducted using the microreactor 300. The overall structure of the microreactor 300 is shown in Fig. 4, wherein micro-passages with a depth of about 500 micrometers are formed by stainless steel base plate through engraving machine. Water and isooctanol were introduced into the first entry branch 301 and the second entry branch 302, respectively, by means of a precision syringe pump, with the entry flow rate controlled at approximately 0.3 m/s. The cross-sectional dimension of the fluid entry passage 304 is 550 micrometers. The mixing unit 310 has a maximum lateral dimension of approximately 3.5 mm, and a longitudinal dimension (excluding the inlet portion and outlet portion) of approximately 2.5 mm. The inlet portion 320 is directly opposite the first blocking portion 311 within the flow chamber 330. The central segment 311B of the first blocking portion 311 has a longitudinal dimension of approximately 200 micrometers and a lateral dimension of approximately 1 mm. Each of the edge segments 311A and 311B of the first blocking portion 311 has a length of approximately 800 micrometers and a width reduced from 200 micrometers to 100 micrometers. The counterflow distance in the counterflow passage formed between the arcuate upstream end 312 of the housing and each of the edge segments 311A and 311B is 150 micrometers (which is much smaller compared with the counterflow distance in the prior arts, in order to reduce the ineffective mixing region). A pair of auxiliary flow-guiding portions 316 is provided, each of which has a lateral dimension of 450 micrometers and a longitudinal dimension of 200 micrometers. The expansion passage 314 has a minimum cross-sectional dimension of 200 micrometers.

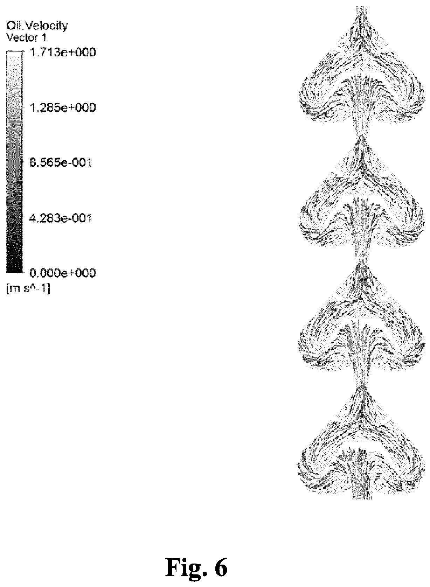

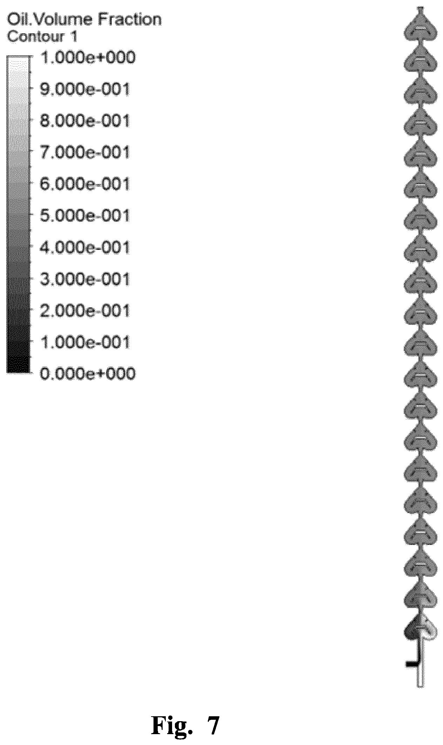

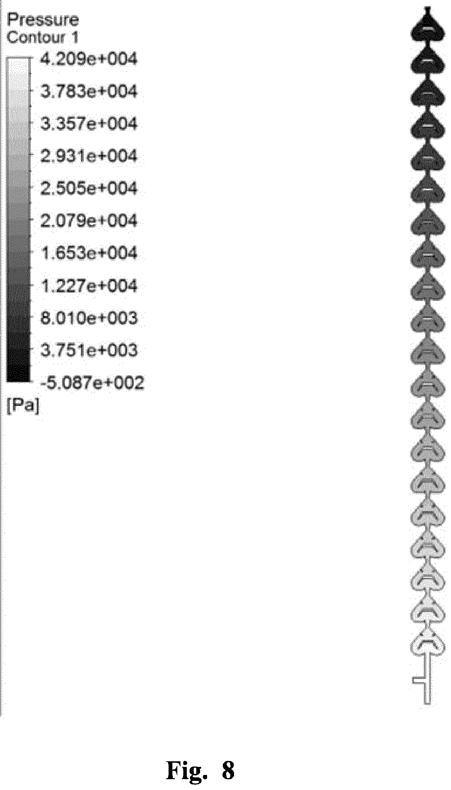

A liquid-liquid mixing experiment is conducted using said microreactor 300 under the same experimental conditions as for the existing microreactors shown in Figs. 1 to 3. Figs. 6 to 8 show the corresponding experimental results. As shown in Fig. 6, the velocity vector distribution of the liquid-liquid mixing procedure of the microreactor 300 is gradually symmetrical and uniform, and the vector arrows of the fluid flow before the strong impact and mixing in the mixing chamber are highly parallel and consistent. This indicates that the velocity vector distribution is highly controllable in the mixing unit 310 of the microreactor 300, which facilitates accurate prediction and control of the mixing effect. As shown in Fig. 7, the microreactor 300 allows for effective mixing of the fluid right after passing through 4 mixing units. Fig. 8 shows a pressure drop of approximately 8,520 Pa after the fluid passes through the 4 mixing units until being effectively mixed.

The above experiment proves that the microreactor 300 according to the present invention can realize effective mixing of fluid through fewer mixing units 310. In other words, compared with the existing microreactor 200 as shown in Fig. 1, the microreactor 300 according to the present invention can substantially improve the mixing efficiency and shorten the mixing time while maintaining a low pressure drop and a large flux, and thus reduces the number of mixing units required, so that the microreactor can have a smaller volume.

## Example 3

The same microreactor 300 as in Embodiment 2 was used for mixing reaction of chloromethane and salicylic acid. The experiment was conducted using chloromethane plus 25% salicylic acid at 22MPa and 350K. The results showed that the required reaction time was about 230s and the yield was 99%, which was 1% higher compared with the conventional method requiring 10 h of reaction time. Moreover, the microreactor 300 clearly demonstrated advantages of simple operation, low cost and significantly reduced space required during the experimental process.

## Example 4

An experiment on gas-liquid mixing efficiency is conducted using the microreactor 300. The overall structure of the microreactor 300 is shown in Fig. 4, with an overall thickness (depth) of approximately 500 micrometers. The flow chamber has a maximum lateral dimension (width) of approximately 4 mm and a longitudinal dimension (excluding the inlet and outlet portions) of approximately 3 mm. The inlet portion 320 is directly opposite the first blocking portion 311 within the flow chamber 330. The central segment 311B of the first blocking portion 311 has a longitudinal dimension of approximately 250 micrometers and a lateral dimension of approximately 1.2 mm. Each of the edge segments 311A and 311B of the first blocking portion 311 has a length of approximately 1 mm and a width reduced from 250 micrometers to 150 micrometers. The counterflow distance in the counterflow passage formed between the arcuate upstream end 312 of the housing and each of the edge segments 311A and 311B is 200 micrometers (which is much smaller compared with the counterflow distance in the prior arts, in order to reduce the ineffective mixing region). A pair of auxiliary flow-guiding portions 316 is provided, each of which has a lateral dimension of 450 micrometers and a longitudinal dimension of 200 micrometers. The expansion passage 314 has a minimum cross-sectional dimension of 250 micrometers.

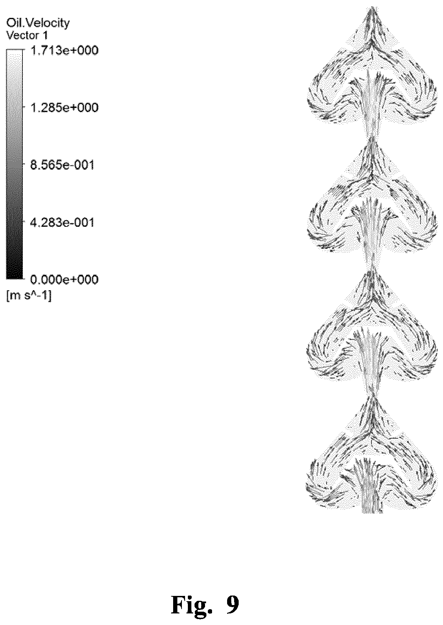

A gas-liquid mixing experiment was conducted using said microreactor 300. The first entry branch 301 and the second entry branch 302 were supplied with deionized water and air, respectively, at an operating temperature of 298 K, a viscosity of $8.9 \times 10^{-4}$ Pa·s, a surface tension coefficient of 0.07 N·m$^{-1}$, and an entry flow rate of 0.3 m/s. The results showed that for gas-liquid mixing, the microreactor 300 can allow for effective mixing of fluid after passing through 4 mixing units, and the pressure drop of the fluid after passing through the 4 mixing units until being effectively mixed was about 2.5 KPa. As shown in Fig. 9, the auxiliary flow-guiding portions 316 can effectively change the main flow direction of the fluid and adjust the impact angle, thereby effectively improving the mixing efficiency.

Compared with the results of the gas-liquid mixing experiment with the existing microreactor in Fig. 1, the microreactor 300 is able to substantially improve the mixing efficiency while maintaining a low pressure drop and a large flux, and has advantages in terms of mixing time, the number of mixing units required, overall volume, etc.

## Example 5

An experiment on nitrification reaction efficiency was conducted for the microreactor 300 according to the present invention. The reactor was made of stainless steel, and a heat exchanger was provided on the outer layer to realize a closed-circuit circulating flow of the heat transfer fluid as well as integrated mixing and heat transfer.

The existing processes for preparing isooctyl nitrate included adding isooctanol dropwise to the prepared mixture of sulfuric acid and nitric acid to carry out the nitrification reaction, and then obtaining the finished product by acid washing, alkali washing, water rinse and refining. Since the reaction was strongly exothermic, the feeding rate of the conventional kettle reactor was very slow and the reaction process took more than 1 hour, in order to avoid the risk of thermal runaway.

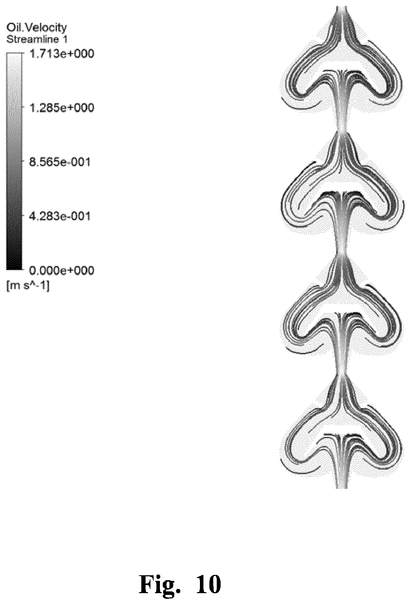

When using the microreactor 300 for reaction to prepare isooctyl nitrate, not only can the mixing and reaction rate be enhanced, but also the heat transfer rate can be significantly increased, thereby improving the safety of the process. The liquid flow paths in the experiment are shown in Fig. 10, which indicate that the microreactor 300 facilitates a uniform and controllable distribution of the liquid phase during the experiment, with a high transfer efficiency. In this manner, the microreactor 300 can not only shorten the reaction time, but also achieve efficient targeted conversion of reactants by controlling the reaction conditions. For example, in a reaction process aiming to obtain dinitrochlorobenzene, it can realize more than 99% of dinitro-products in the total products.

**Example 6**

An experiment on the efficiency of the absorption of carbon dioxide by alcohol amines was conducted using the microreactor 300. The structure of the microreactor 300 was the same as in Example 4.

The experimental processes were as follows. Carbon dioxide was absorbed by alcohol amines under low temperature conditions and then heated to release the carbon dioxide from the chemical solvent. Specifically, a gas mixture of carbon dioxide with a volume fraction of 12% and a diethanol amine solution with a concentration of 30 wt.% were introduced into the microreactor 300 through the first entry branch 301 and the second entry branch 302, respectively, at 8 MPa, wherein the gas feed was 5-10 $Nm^3$/h and the liquid phase feed was 50-80 L/h.

The results show that the carbon dioxide absorption rate exceeds 95% under the condition of high liquid-gas ratio, which has a remarkable absorption effect. Therefore, the microreactor 300 has advantages including fast absorption speed, remarkable absorption capacity, high purity of recovered carbon dioxide, etc.

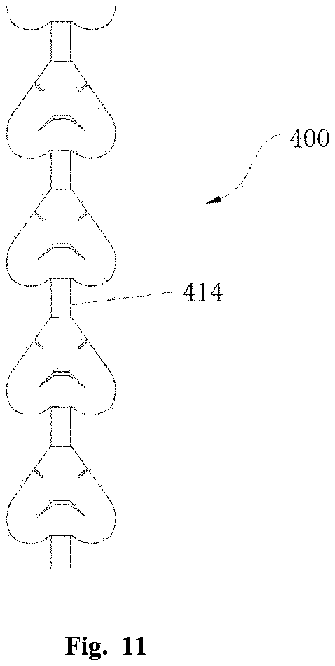

Fig. 11 shows a structure of a microreactor 400 according to a further embodiment of the present invention. The microreactor 400 has a structure similar to that of the microreactor 300, wherein the difference mainly lies in that an inlet portion of the microreactor 400 is formed as a passage 414 with a constant cross-sectional dimension. The dimension of the passage 414 is the same as the minimum cross-sectional dimension of a neck of an outlet portion.

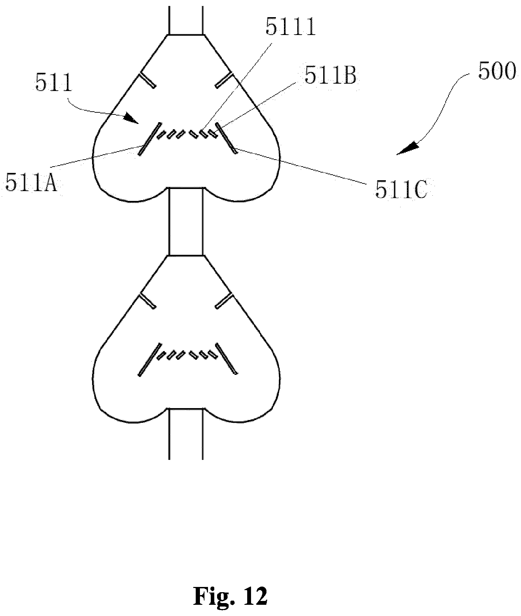

Fig. 12 shows a structure of a microreactor 500 according to a still embodiment of the present invention. The microreactor 500 has a structure similar to that of the microreactor 400, wherein the difference mainly lies in the structure of the first blocking portion 511.

The first blocking portion 511 comprises a central segment 511B arranged at a laterally central position within the flow chamber. The central segment 511B with a linear structure extends along the lateral direction, directly opposite the inlet portion. The central segment 511B comprises a plurality of blocking elements 5111 spaced apart from each other. The spacing between two adjacent blocking elements allows a portion of the fluid to flow directly therethrough to the mixing region. The fluid flowing directly into the mixing region and the fluid flowing into the mixing region via the first advancing passage and the second advancing passage may impact on each other, in order to facilitate the mixing thereof. The blocking elements 5111 may be configured to be inclined.

The first blocking portion 311 further comprises linear edge segments 511A and 511C provided at both ends of the central segment 511B. Free ends of the edge segments 511A and 511C as a whole are both more inclined towards the upstream side than the central segment 511B, and may be more inclined than each of the blocking elements 5111, which help to form a certain degree of turbulence herein, thereby facilitating a more efficient mixing of the fluid.

The present invention is not limited to the particular embodiments disclosed herein, but by the claims.

**Claims**

1. A microreactor (300), comprising a plurality of mixing units (310) connected in sequence along a longitudinal direction, each of which comprises a housing (350) in which a flow chamber (330) is formed, an inlet portion (320) and an outlet portion (322) formed on two opposite ends of each mixing unit (310) along the longitudinal direction, respectively, being in communication with the flow chamber (330);

   wherein the mixing unit (310) further comprises a first blocking portion (311) arranged within the flow chamber (330), so that in the flow chamber (330) a first advancing passage (317) is defined by a first side profile (352) of the housing (350) and the first blocking portion (311), a second advancing passage (318) is defined by a second side profile (354) of the housing (350) opposite the first side profile (352) and the first blocking portion (311), and a mixing region (319) is defined between the first blocking portion (311) and the outlet portion (322), both the first advancing passage (317) and the second advancing passage (318) being in communication with the mixing region (319), and
   wherein at downstream ends of said first advancing passage (317) and said second advancing passage (318), said microreactor (300) is further provided with auxiliary flow-guiding portions (316) protruding from said first side profile (352) and said second side profile (354) respectively and extending towards but spaced apart from each other, the auxiliary flow-guiding portions (316) being configured so that the fluid in the first advancing passage (317) and that in the second advancing passage (318) flow towards each other into the mixing region (319) and impact on each other,
   **characterized in that** extension lines at ends of surfaces of a pair of auxiliary flow-guiding portions (316) facing the first advancing passage (317) or the second advancing passage (318) are configured to intersect within the mixing region (319).

2. The microreactor (300) according to claim 1, **characterized in that** a surface of each auxiliary flow-guiding portion (316) facing the first advancing passage (317) or the second advancing passage (318) is configured to be planar or arcuate.

3. The microreactor (300) according to any one of claims 1 to 2, **characterized in that** said auxiliary flow-guiding portions (316) are configured so that an angle between a main flow direction of fluid in the first advancing passage (317) and that in the second advancing passage (318) exceeds 90°, and/or a cross-section of each of the first advancing passage (317) and the second advancing passage (318) is configured to be constant.

4. The microreactor (300) according to any one of claims 1 to 2, **characterized in that** a lateral dimension of each auxiliary flow-guiding portion (316) is no more than a lateral dimension of the first blocking portion (311).

5. The microreactor (300) according to any one of claims 1 to 2, **characterized in that** a distance along the longitudinal direction between each auxiliary flow-guiding portion (316) and the first blocking portion (311) accounts for 1/6 to 1/2 of a longitudinal dimension of the entire flow chamber (330).

6. The microreactor (300) according to any one of claims 1 to 2, **characterized in that** said first side profile (352) and said second side profile (354) are symmetrically arranged opposite each other, each of which comprises an arcuate upstream segment (312) and a linear downstream segment (313) smoothly connected thereto.

7. The microreactor (300) according to claim 6, **characterized in that** said first blocking portion (311) is centrally arranged within said flow chamber (330) along a lateral direction perpendicular to the longitudinal direction, and comprises a linear central segment (311B) extending along the lateral direction and a linear edge segment (311A, 311C) connected to each end of the central segment (311B), said edge segment (311A, 311C) being inclined toward said central segment (311B) along an upstream direction, so as to form an angle between said edge segment and said central segment (311B).

8. The microreactor (300) according to claim 7, **characterized in that** the linear downstream segment (313) of the first side profile (352) is inclined toward that of the second side profile (354) along a downstream direction, and the linear downstream segment (313) is arranged parallel to the edge segment (311A, 311C), so that a cross-section of a passage between said downstream segment (313) and said edge segment (311A, 311C) remains constant.

9. The microreactor (300) according to any one of claims 1 to 2, **characterized in that** a longitudinal length of said first blocking portion (311) accounts for 1/4 to 1/2 of a longitudinal length of said flow chamber (330).

10. The microreactor (300) according to claim 7, **characterized in that** both the inlet portion (320) and the outlet portion (322) of each said mixing unit (310) are in communication with the flow chamber (330) of an adjacent mixing chamber, wherein the central segment (311B) of the first blocking portion (311) is directly opposite the inlet portion (320), and a lateral dimension of said central segment (311B) is no more than 3 times a maximum cross-sectional dimension of said inlet portion (320).

11. The microreactor (300) according to claim 6, **characterized in that** said first blocking portion (311) is centrally arranged within said flow chamber (330) along a lateral direction perpendicular to the longitudinal direction, and comprises a linear central segment (311B) extending along the lateral direction and a linear edge segment (311A, 311C) arranged at each end of the central segment (311B), said edge segment (311A, 311C) being inclined toward said central segment (311B) along an upstream direction, so as to form an angle between said edge segment (311A, 311C) and said central segment (311B), wherein said central segment (311B) comprises a plurality of blocking elements spaced apart from each other, allowing a portion of the fluid to flow into the mixing region (319) through spacing between the blocking elements and impact on the fluid flowing into the mixing region (319) via the first advancing passage (317) and the second advancing passage (318).

12. The microreactor (300) according to any one of claims 1 to 2, **characterized in that** an expansion passage (314) gradually expanding downstream along the longitudinal direction is formed between the outlet portion (322) of one mixing unit (310) and the inlet portion of a next mixing unit (310).

13. The microreactor (300) according to claim 12, **characterized in that** a minimum cross-sectional dimension of the expansion passage (314) is no less than 1/4 of a maximum cross-sectional dimension of the expansion passage (314).

14. The microreactor (300) according to any one of claims 1 to 2, **characterized in that** a ratio of a maximum cross-sectional dimension of an expansion passage (314) to a maximum lateral dimension of said flow chamber (330) ranges from 1/10 and 1/2.

**Patentansprüche**

1. Ein Mikroreaktor (300), der eine Mehrzahl von Mischeinheiten (310) umfasst, die in einer Reihenfolge entlang einer Längsrichtung verbunden sind, wobei jede Mischeinheit ein Gehäuse (350) umfasst, in dem eine Strömungskammer (330) ausgebildet ist, wobei ein Einlassabschnitt (320) und ein Auslassabschnitt (322), die an zwei gegenüberliegenden Enden jeder Mischeinheit (310) entlang der Längsrichtung ausgebildet sind, jeweils mit der Strömungskammer (330) in Verbindung stehen;

wobei die Mischeinheit (310) ferner einen ersten Sperrabschnitt (311) umfasst, der innerhalb der Strömungskammer (330) angeordnet ist, so dass in der Strömungskammer (330) ein erster Vorwärtskanal (317) durch ein erstes Seitenprofil (352) des Gehäuses (350) und den ersten Sperrabschnitt (311) definiert ist, ein zweiter Vorwärtskanal (318) durch ein zweites Seitenprofil (354) des Gehäuses (350) gegenüber dem ersten Seitenprofil (352) und dem ersten Sperrabschnitt (311) definiert ist, und ein Mischbereich (319) zwischen dem ersten Sperrabschnitt (311) und dem Auslassabschnitt (322) definiert ist, wobei sowohl der erste Vorwärtskanal (317) als auch der zweite Vorwärtskanal (318) mit dem Mischbereich (319) in Verbindung stehen, und wobei an den stromabwärtigen Enden des ersten Vorwärtskanals (317) und des zweiten Vorwärtskanals (318) der Mikroreaktor (300) ferner mit zusätzlichen Strömungsleitabschnitten (316) versehen ist, die aus dem ersten Seitenprofil (352) beziehungsweise dem zweiten Seitenprofil (354) hervorstehen und sich aufeinander zu erstrecken, jedoch voneinander beabstandet sind, wobei die zusätzlichen Strömungsleitabschnitte (316) so konfiguriert sind, dass das Fluid im ersten Vorwärtskanal (317) und das im zweiten Vorwärtskanal (318) aufeinander zu in den Mischbereich (319) fließen und aufeinander treffen, **dadurch gekennzeichnet, dass** Verlängerungslinien an den Enden der Oberflächen eines Paares von zusätzlichen Strömungsleitabschnitten (316), die dem ersten Vorwärtskanal (317) oder dem zweiten Vorwärtskanal (318) zugewandt sind, so konfiguriert sind, dass sie sich innerhalb des Mischbereichs (319) schneiden.

2. Mikroreaktor (300) nach Anspruch 1, **dadurch gekennzeichnet, dass** eine Oberfläche jedes zusätzlichen Strömungsleitabschnitts (316), die dem ersten Vorwärtskanal (317) oder dem zweiten Vorwärtskanal (318) zugewandt ist, so konfiguriert ist, dass sie planar oder bogenförmig ist.

3. Mikroreaktor (300) nach einem der Ansprüche 1 bis 2, **dadurch gekennzeichnet, dass** die zusätzlichen Strömungsleitabschnitte (316) so konfiguriert sind, dass ein Winkel zwischen einer Hauptströmungsrichtung des Fluids im ersten Vorwärtskanal (317) und der im zweiten Vorwärtskanal (318) 90° überschreitet und/oder ein Querschnitt jedes der ersten Vorwärtskanäle (317) und der zweiten Vorwärtskanäle (318) so konfiguriert ist, dass er konstant ist.

4. Mikroreaktor (300) nach einem der Ansprüche 1 bis 2, **dadurch gekennzeichnet, dass** eine seitliche Abmessung jedes zusätzlichen Strömungsleitabschnitts (316) nicht größer ist als eine seitliche Abmessung des ersten Sperrabschnitts (311).

5. Mikroreaktor (300) nach einem der Ansprüche 1 bis 2, **dadurch gekennzeichnet, dass** ein Abstand entlang der Längsrichtung zwischen jedem zusätzlichen Strömungsleitabschnitt (316) und dem ersten Sperrabschnitt (311) 1/6 bis 1/2 einer Längsabmessung der gesamten Strömungskammer (330) ausmacht.

6. Mikroreaktor (300) nach einem der Ansprüche 1 bis 2, **dadurch gekennzeichnet, dass** das erste Seitenprofil (352) und das zweite Seitenprofil (354) symmetrisch einander gegenüberliegend angeordnet sind, wobei jedes ein bogenförmiges stromaufwärtiges Segment (312) und ein lineares stromabwärtiges Segment (313) umfasst, das glatt daran anschließt.

7. Mikroreaktor (300) nach Anspruch 6, **dadurch gekennzeichnet, dass** der erste Sperrabschnitt (311) innerhalb der Strömungskammer (330) entlang einer seitlichen Richtung senkrecht zur Längsrichtung mittig angeordnet ist und ein lineares mittleres Segment (311B), das sich entlang der seitlichen Richtung erstreckt, und ein lineares Rand-Segment (311A, 311C) umfasst, das mit jedem Ende des mittleren Segments (311B) verbunden ist, wobei das Rand-Segment (311A, 311C) entlang einer stromaufwärtigen Richtung zum mittleren Segment (311B) hin geneigt ist, so dass zwischen dem Rand-Segment und dem mittleren Segment (311B) ein Winkel gebildet wird.

8. Mikroreaktor (300) nach Anspruch 7, **dadurch gekennzeichnet, dass** das lineare stromabwärtige Segment (313) des ersten Seitenprofils (352) entlang einer stromabwärtigen Richtung zu dem des zweiten Seitenprofils (354) geneigt ist und das lineare stromabwärtige Segment (313) parallel zu dem Rand-Segment (311A, 311C) angeordnet ist, so dass ein Querschnitt eines Durchgangs zwischen dem stromabwärtigen Segments (313) und dem Rand-Segment (311A, 311C) konstant bleibt.

**9.** Mikroreaktor (300) nach einem der Ansprüche 1 bis 2, **dadurch gekennzeichnet, dass** die Längsausdehnung des ersten Sperrabschnitts (311) 1/4 bis 1/2 der Längsausdehnung der Strömungskammer (330) ausmacht.

**10.** Mikroreaktor (300) nach Anspruch 7, **dadurch gekennzeichnet, dass** sowohl der Einlassabschnitt (320) als auch der Auslassabschnitt (322) jeder Mischeinheit (310) mit der Strömungskammer (330) einer benachbarten Mischkammer in Verbindung stehen,

wobei das mittlere Segment (311B) des ersten Sperrabschnitts (311) direkt gegenüber dem Einlassabschnitt (320) angeordnet ist und eine seitliche Abmessung des mittleren Segments (311B) nicht mehr als das Dreifache einer maximalen Querschnittsabmessung des Einlassabschnitts (320) beträgt.

**11.** Mikroreaktor (300) nach Anspruch 6, **dadurch gekennzeichnet, dass** der erste Sperrabschnitt (311) innerhalb der Strömungskammer (330) entlang einer seitlichen Richtung senkrecht zur Längsrichtung mittig angeordnet ist und ein lineares mittleres Segment (311B), das sich entlang der seitlichen Richtung erstreckt, und ein lineares Rand-Segment (311A, 311C) umfasst, das an jedem Ende des mittleren Abschnitts (311B) angeordnet ist, wobei das Rand-Segment (311A, 311C) entlang einer stromaufwärtigen Richtung zum mittleren Segment (311B) hin geneigt ist, so dass zwischen dem Rand-Segment (311A, 311C) und dem mittleren Segment (311B) ein Winkel gebildet wird,

wobei das mittlere Segment (311B) eine Mehrzahl von voneinander beabstandeten Blockierelementen umfasst, die es einem Teil des Fluids ermöglichen, durch den Abstand zwischen den Blockierelementen in den Mischbereich (319) zu strömen und auf das Fluid einzuwirken, das über den ersten Vorwärtskanal (317) und den zweiten Vorwärtskanal (318) in den Mischbereich (319) strömt.

**12.** Mikroreaktor (300) nach einem der Ansprüche 1 bis 2, **dadurch gekennzeichnet, dass** ein sich stromabwärts entlang der Längsrichtung allmählich erweiternder Erweiterungskanal (314) zwischen dem Auslassabschnitt (322) einer Mischeinheit (310) und dem Einlassabschnitt einer nächsten Mischeinheit (310) ausgebildet ist.

**13.** Mikroreaktor (300) nach Anspruch 12, **dadurch gekennzeichnet, dass** eine minimale Querschnittsabmessung des Expansionskanals (314) nicht weniger als 1/4 einer maximalen Querschnittsabmessung des Expansionskanals (314) beträgt.

**14.** Mikroreaktor (300) nach einem der Ansprüche 1 bis 2, **dadurch gekennzeichnet, dass** das Verhältnis der maximalen Querschnittsabmessung eines Expansionskanals (314) zur maximalen seitlichen Abmessung der Strömungskammer (330) zwischen 1/10 und 1/2 liegt.

**Revendications**

**1.** Microréacteur (300) comprenant une pluralité d'unités de mélange (310) reliées en séquence le long d'une direction longitudinale, chacune comprenant un boîtier (350) dans lequel une chambre d'écoulement (330) est formée, une partie d'entrée (320) et une partie de sortie (322) formées sur deux extrémités opposées de chaque unité de mélange (310) le long de la direction longitudinale, respectivement, étant en communication avec la chambre d'écoulement (330) ;

dans lequel l'unité de mélange (310) comprend en outre une première partie de blocage (311) agencée dans la chambre d'écoulement (330), de sorte que dans la chambre d'écoulement (330), un premier passage d'avancement (317) est défini par un premier profil latéral (352) du boîtier (350) et la première partie de blocage (311), un second passage d'avancement (318) est défini par un second profil latéral (354) du boîtier (350) opposé au premier profil latéral (352) et à la première partie de blocage (311), et une région de mélange (319) est définie entre la première partie de blocage (311) et la partie de sortie (322), le premier passage d'avancement (317) et le second passage d'avancement (318) étant tous deux en communication avec la région de mélange (319), et dans lequel, aux extrémités en aval dudit premier passage d'avancement (317) et dudit second passage d'avancement (318), ledit microréacteur (300) est en outre pourvu de parties de guidage d'écoulement auxiliaires (316) faisant saillie à partir dudit premier profil latéral (352) et dudit second profil latéral (354) respectivement et s'étendant l'une vers l'autre, mais espacées l'une de l'autre, les parties de guidage d'écoulement auxiliaires (316) étant configurées de manière à ce que le fluide dans le premier passage d'avancement (317) et celui dans le second passage d'avancement (318) s'écoulent l'un vers l'autre dans la région de mélange (319) et se percutent l'un sur l'autre, **caractérisé en ce que** les lignes d'extension aux extrémités des surfaces d'une paire de parties de guidage d'écoulement auxiliaires (316) faisant face au premier passage d'avancement (317) ou au second passage d'avancement (318) sont configurées pour se croiser dans la région de mélange (319).

2. Microréacteur (300) selon la revendication 1, **caractérisé en ce qu'**une surface de chaque partie de guidage d'écoulement auxiliaire (316) faisant face au premier passage d'avancement (317) ou au second passage d'avancement (318) est configurée pour être plane ou arquée.

3. Microréacteur (300) selon l'une quelconque des revendications 1 à 2, **caractérisé en ce que** lesdites parties de guidage d'écoulement auxiliaires (316) sont configurées de sorte qu'un angle entre une direction principale d'écoulement de fluide dans le premier passage d'avancement (317) et celle dans le second passage d'avancement (318) dépasse 90°, et/ou
une section transversale de chacun du premier passage d'avancement (317) et du second passage d'avancement (318) est configurée pour être constante.

4. Microréacteur (300) selon l'une quelconque des revendications 1 à 2, **caractérisé en ce qu'**une dimension latérale de chaque partie de guidage d'écoulement auxiliaire (316) n'est pas supérieure à une dimension latérale de la première partie de blocage (311).

5. Microréacteur (300) selon l'une quelconque des revendications 1 à 2, **caractérisé en ce qu'**une distance le long de la direction longitudinale entre chaque partie de guidage d'écoulement auxiliaire (316) et la première partie de blocage (311) représente 1/6 à 1/2 d'une dimension longitudinale de la chambre d'écoulement (330) entière.

6. Microréacteur (300) selon l'une quelconque des revendications 1 à 2, **caractérisé en ce que** ledit premier profil latéral (352) et ledit second profil latéral (354) sont agencés symétriquement l'un en face de l'autre, chacun d'eux comprenant un segment amont (312) arqué et un segment aval (313) linéaire reliés en douceur à celui-ci.

7. Microréacteur (300) selon la revendication 6, **caractérisé en ce que** ladite première partie de blocage (311) est agencée au centre de ladite chambre d'écoulement (330) le long d'une direction latérale perpendiculaire à la direction longitudinale, et comprend un segment central (311B) linéaire s'étendant le long de la direction latérale et un segment de bord (311A, 311C) linéaire relié à chaque extrémité du segment central (311B), ledit segment de bord (311A, 311C) étant incliné vers ledit segment central (311B) le long d'une direction amont, de manière à former un angle entre ledit segment de bord et ledit segment central (311B).

8. Microréacteur (300) selon la revendication 7, **caractérisé en ce que** le segment aval (313) linéaire du premier profil latéral (352) est incliné vers celui du second profil latéral (354) le long d'une direction aval, et
le segment aval (313) linéaire est agencé parallèlement au segment de bord (311A, 311C), de sorte qu'une section transversale d'un passage entre ledit segment aval (313) et ledit segment de bord (311A, 311C) reste constante.

9. Microréacteur (300) selon l'une quelconque des revendications 1 à 2, **caractérisé en ce qu'**une longueur longitudinale de ladite première partie de blocage (311) représente 1/4 à 1/2 d'une longueur longitudinale de ladite chambre d'écoulement (330).

10. Microréacteur (300) selon la revendication 7, **caractérisé en ce que** la partie d'entrée (320) et la partie de sortie (322) de chaque unité de mélange (310) sont toutes deux en communication avec la chambre d'écoulement (330) d'une chambre de mélange adjacente, dans lequel le segment central (311B) de la première partie de blocage (311) est directement opposé à la partie d'entrée (320), et une dimension latérale dudit segment central (311B) n'est pas supérieure à 3 fois une dimension de section transversale maximale de ladite partie d'entrée (320).

11. Microréacteur (300) selon la revendication 6, **caractérisé en ce que** ladite première partie de blocage (311) est agencée au centre de ladite chambre d'écoulement (330) selon une direction latérale perpendiculaire à la direction longitudinale, et comprend un segment central (311B) linéaire s'étendant le long de la direction latérale et un segment de bord (311A, 311C) linéaire agencé à chaque extrémité du segment central (311B), ledit segment de bord (311A, 311C) étant incliné vers ledit segment central (311B) le long d'une direction amont, de manière à former un angle entre ledit segment de bord (311A, 311C) et ledit segment central (311B),
dans lequel ledit segment central (311B) comprend une pluralité d'éléments de blocage espacés les uns des autres, permettant à une partie du fluide de s'écouler dans la région de mélange (319) à travers un espacement entre les éléments de blocage et de percuter le fluide s'écoulant dans la région de mélange (319) par le biais du premier passage d'avancement (317) et du second passage d'avancement (318).

12. Microréacteur (300) selon l'une quelconque des revendications 1 à 2, **caractérisé en ce qu'**un passage d'expansion (314) s'élargissant progressivement vers l'aval le long de la direction longitudinale est formé entre la partie de sortie (322) d'une unité de mélange (310) et la partie d'entrée d'une unité de mélange (310) suivante.

**13.** Microréacteur (300) selon la revendication 12, **caractérisé en ce qu'**une dimension de section transversale minimale du passage d'expansion (314) n'est pas inférieure à 1/4 d'une dimension maximale de section transversale du passage d'expansion (314).

**14.** Microréacteur (300) selon l'une quelconque des revendications 1 à 2, **caractérisé en ce qu'**un rapport entre une dimension de section transversale maximale d'un passage d'expansion (314) et une dimension latérale maximale de ladite chambre d'écoulement (330) est compris entre 1/10 et 1/2.

**Fig. 1**

Fig. 2

**Fig. 3**

**Fig. 4**

**Fig. 5**

**Fig. 6**

Oil.Volume Fraction
Contour 1
1.000e+000
9.000e-001
8.000e-001
7.000e-001
6.000e-001
5.000e-001
4.000e-001
3.000e-001
2.000e-001
1.000e-001
0.000e+000

**Fig. 7**

Pressure
Contour 1
- 4.209e+004
- 3.783e+004
- 3.357e+004
- 2.931e+004
- 2.505e+004
- 2.079e+004
- 1.653e+004
- 1.227e+004
- 8.010e+003
- 3.751e+003
- -5.087e+002
[Pa]

Fig. 8

Oil.Velocity
Vector 1
1.713e+000

1.285e+000

8.565e-001

4.283e-001

0.000e+000
[m s^-1]

**Fig. 9**

Fig. 10

400

414

Fig. 11

**Fig. 12**

**REFERENCES CITED IN THE DESCRIPTION**

**Patent documents cited in the description**

- WO 2004076056 A2

- CN 206240456 U